# EUROPEAN PATENT SPECIFICATION

(11) **EP 3 361 595 B1**
(45) Date of publication and mention of the grant of the patent: **04.12.2019**
(21) Application number: 17155550.1
(22) Date of filing: 10.02.2017
(51) Int. Cl.: H02J 3/38, H02J 7/34

(54) **APPARATUS TO ACCUMULATE AND SUPPLY ELECTRIC ENERGY TO A USER DEVICE**
VORRICHTUNG ZUM AKKUMULIEREN UND LIEFERN VON ENERGY AN EIN NUTZERGERÄT
DISPOSITIF D'ACCUMULER ET FOURNIR D'ÉNERGIE ÉLECTRIQUE A UN APPAREIL D'USAGER

(43) Date of publication of application: 15.08.2018
(73) Proprietor: Di Giulio, Florindo William, 67050 Bisegna (AQ) (IT)
(72) Inventor: Di Giulio, Florindo William, 67050 Bisegna (AQ) (IT)
(74) Representative: Petraz, Gilberto Luigi

(56) References cited:
- EP-A1- 3 098 928
- US-A1- 2012 176 088
- US-A1- 2013 038 130

## Description

### FIELD OF THE INVENTION

The present invention concerns an apparatus to accumulate and supply electric energy to a user device. In particular, it concerns an apparatus that can produce, accumulate and supply electric energy to a user device.

### BACKGROUND OF THE INVENTION

Plants are known for the production of electric energy from renewable sources, for domestic or industrial use, which comprise one or more energy supply units from renewable sources, such as for example energy produced by photovoltaic, thermal, wind or hydroelectric plants.

Energy feed units that exploit renewable sources can produce, at least at certain moments of the day, a greater quantity of energy than that needed to power a user device.

One solution is known, also called on-grid, in which any excess energy produced by the renewable energy sources is introduced into the traditional electric supply network, and in the same way, any possible lack of energy from the renewable sources is made up for by the traditional electric supply network.

However, the management of the traditional electric supply networks acknowledges to the energy producer a value of the energy introduced into the traditional electric supply network that is lower than the market value: it is therefore disadvantageous for the user to introduce energy to the traditional electric supply network.

For this reason electric accumulation devices are known, for example batteries, which allow to accumulate the excess energy to make it available when required. However, in this case costly apparatuses are needed to control and convert the energy both to allow the initial accumulation and also to allow the subsequent supply.

Furthermore, battery-type accumulation devices do not allow to completely use the energy accumulated in them due to the technical recharging cycle, and they are also subject to rapid deterioration and loss of efficiency, with consequent costs of maintenance, replacement and disposal thereof.

Electric energy accumulation devices are also known which exploit the principle of electrolysis to produce hydrogen to be used for the subsequent production of electric energy by means of fuel cells. An example of one such known device is described in document US-A-2009/0189445.

Another known energy storage system and a controlling method thereof are described for example in the document US-A-2012/176088.

However, these known apparatuses are particularly complex and costly due to the large number of management components that are required to control and manage the various sources of energy.

One purpose of the present invention is to obtain an apparatus to accumulate and supply energy that is efficient and versatile so that it can adapt to the variable conditions of energy requirement from the user devices.

Another purpose of the present invention is to obtain an apparatus to accumulate and supply energy that can be connected to renewable energy sources and that can adapt to the variable conditions of energy produced by the latter.

Another purpose of the present invention is to obtain an apparatus to accumulate and supply energy that allows to simplify the control and command circuit of the energy distribution.

Another purpose of the present invention is to obtain an apparatus to accumulate and supply energy that is longer lasting than known devices and that allows to reduce management and maintenance costs.

Another purpose of the present invention is to obtain an apparatus to supply energy that is simple and flexible and allows to manage situations of overproduction and under-production of electric energy by the units that supply energy from renewable sources.

Another purpose of the present invention is to obtain an apparatus to supply energy that has a low impact on the environment.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea. Thereby, aspects of the invention are disclosed in independent claims 1 and 9.

In accordance with the above purposes, the present invention concerns an apparatus to accumulate and supply electric energy to a user device. The apparatus according to the present invention comprises at least one renewable energy production unit and a control and command unit, connected at least to the renewable energy production unit.

The renewable energy production unit is connected to and supplies continuously, during production, electric energy to the accumulation unit.

According to one embodiment, the renewable energy production unit advantageously comprises a wind power production unit that allows to produce electric energy continuously during the whole day.

Alternatively the renewable energy production unit comprises at least one of either a bank of solar cells, a turbine that uses a hydraulic head or other.

The renewable energy production unit comprises at least one ultracapacitor. In possible variant embodiments the renewable energy production unit comprises a bank of ultracapacitors.

According to some embodiments, the user device is connected to an external electric network, for example to a traditional electric energy supply, and at least to the accumulation unit to receive electric energy from it. The control and command unit, due to the charge accumulated in the accumulation unit, selectively connects the user device to the accumulation unit, or to the external electric network.

The apparatus comprises a converter of electric energy connected between the ultracapacitor and the user device and configured to transform the electric energy accumulated in the ultracapacitor into energy suitable to be used by the user device.

The apparatus comprises a first switch device connected between the electric energy converter and the user device, and a second switch device connected between the user device and the electric network. The control and command unit is configured to selectively activate the first switch device and the second switch device and selectively connect the user device to the accumulation unit or respectively to the electric network at least as a function of the charge available in the at least one ultracapacitor.

According to one aspect of the present invention, the command and control unit commands the electric energy converter and is controlled by an electronic board, wherein said command and control unit is configured to generate two waves of power voltage having two frequency bursts, with a frequency very similar to the value of nominal frequency of the power voltage of the external electric network, in which a first frequency burst is a frequency slightly higher than nominal frequency, while the other burst is a slightly lower frequency, but both comprised in the range of tolerance of the external electric network, such that, during the frequency bursts, to command the commutation, wherein the control and command unit is configured to wait until the sinusoidal wave of the electric energy converter is synchronized with the sinusoidal wave of the external electric network, detecting the synchronization when both sinusoidal waves reach the value of 0V in the passage toward the positive side of the sinusoidal wave.

When the accumulation unit contains sufficient electric energy, the user device is directly fed with the charge accumulated. The control and command unit regularly verifies the amount of charge present in the accumulation unit and if the energy accumulated is not enough, it disables the connection between user device and accumulation unit and enables the connection of the user device with the external electric network.

According to a possible variant embodiment, the control and command unit can also verify the requirement of energy by the user device in order to monitor consumption.

According to another variant, the control and command unit verifies both the amount of charge present in the accumulation unit, and also the requirement of energy by the user device in order to disable/enable the connection between the user device and the accumulation unit or between the user device and the external electric network.

If the accumulation unit is saturated with electric energy, and the user device consumes less energy than that produced by the renewable energy production unit, then the excess energy is given up by the accumulation unit, for example made up of a heating device, or by another energy accumulation device, or by other energy accumulation means of the known type.

In particular, at least part of the excess electric energy can be sent to a heating device, for example a resistance, in order to heat domestic water of the user device for example.

Possible embodiments of the present invention also concern a method to accumulate and supply electric energy to a user device which provides to:
- produce electric energy with a renewable energy production unit;
- accumulate the electric energy produced in an accumulation unit.

According to one aspect of the present invention, the method provides to:
- accumulate the energy produced by the renewable energy production unit in at least one ultracapacitor;
- convert, using an electric energy converter, the electric energy accumulated in the ultracapacitor into energy suitable to be used by the user device;
- selectively connect the user device to the accumulation unit or to an electric network by means of a first switch device and a second switch device respectively, selectively drivable by a control and command unit at least as a function of the charge available in one ultracapacitor.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a block diagram of an apparatus to accumulate and supply electric energy to a user device according to some embodiments of the present invention;
- fig. 2 is a block diagram of a part of the apparatus to accumulate and supply electric energy to a user device according to some embodiments of the present invention.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

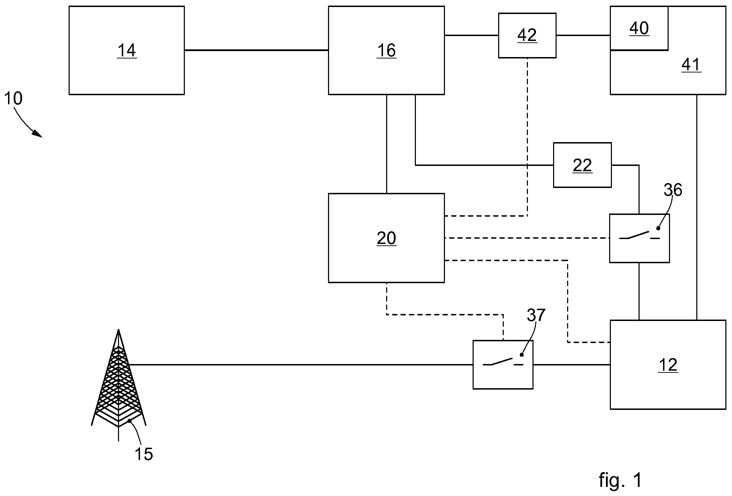

According to one embodiment, fig. 1 shows an apparatus 10 to accumulate and supply electric energy configured to supply electric energy to a user device 12, whether domestic or industrial.

According to some embodiments, the apparatus 10 comprises at least one renewable energy production unit 14 for the production of electric energy.

The renewable energy production unit 14 can be for example a wind power production unit 14a, a solar energy production unit 14b, or a hydroelectric or geothermal plant.

According to possible variant embodiments, several renewable energy supply units 14 can be provided.

According to possible embodiments, the apparatus 10 also comprises an accumulation unit 16, configured to store the energy produced by the renewable energy production unit 14.

According to some embodiments of the present invention, the accumulation unit 16 comprises at least one ultracapacitor 18.

According to some embodiments, the accumulation unit 16 comprises a bank of ultracapacitors 18.

According to some embodiments, the ultracapacitors 18 are connected in series with each other.

Here and hereafter in the description, the term "ultracapacitors" means capacitors that can store a quantity of charge of electric energy that can vary between 1 F and 4000 F.

In possible solutions, the ultracapacitors 18 can have a capacity comprised between about 2000 F and about 4000 F.

According to some embodiments, safety elements 19 can be provided, such as for example Zener diodes, located in parallel with each ultracapacitor 18 and configured to create an alternate path for the current if the charge of one ultracapacitor 18 reaches its maximum level before other ultracapacitors 18 located in series, so as to prevent voltage levels that can damage the ultracapacitors 18.

The accumulation unit 16 can be connected to the user device 12 to power it with the accumulated electric energy.

According to some embodiments, the user device is also connected to an external electric network 15, for example a traditional electric energy supply network, to receive electric energy even if there is not sufficient charge accumulated in the accumulation unit 16.

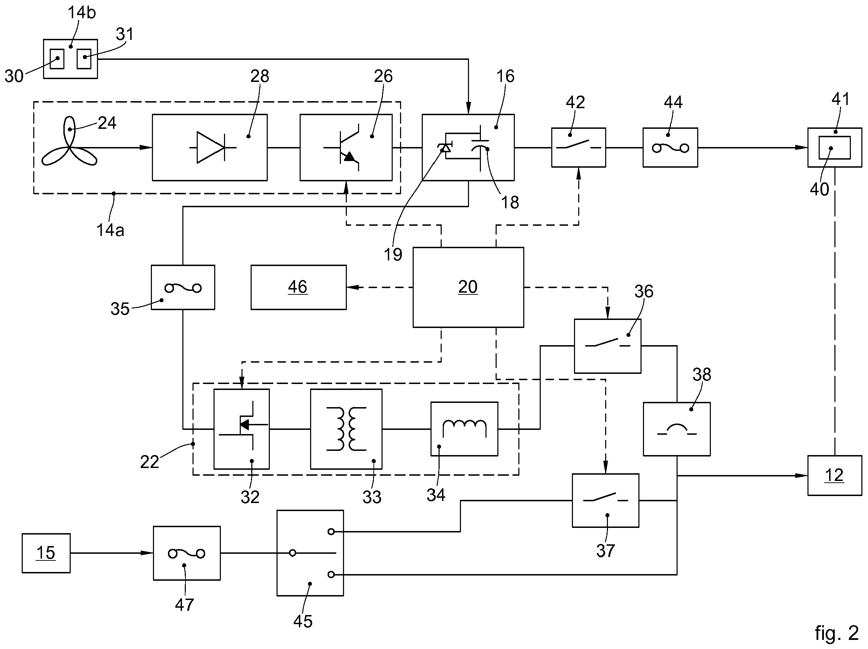

According to embodiments described using figs. 1 and 2, the apparatus 10 comprises a control and command unit 20 connected at least to the accumulation unit 16 and the user device 12.

The control and command unit 20 constantly verifies the quantity of charge accumulated in the bank of ultracapacitors 18 and according to the data detected selectively connects the user device 12 to the accumulation unit 16 or the external electric network 15.

According to possible variant embodiments, the control and command unit 20 also constantly verifies the requirements of electric energy by the user device 12 and according to the data detected and the quantity of charge present in the accumulation unit 16 selectively connects the user device 12 to the accumulation unit 16 or the external electric network 15.

According to embodiments described using fig. 2, a renewable energy production unit 14 can be a wind power production unit 14a, which is able to produce electric energy continuously, even when there is little wind, or weak wind, for example 3 m/s.

According to possible solutions, the wind power production unit 14a comprises a wind generator 24, a propeller or any device suitable to produce electric energy exploiting the energy of the wind. The wind power production unit 14a can also comprise an energy conversion device 26, configured to transform the wind power produced by the wind generator 24 into electric energy that can be stored in the ultracapacitor 18.

The energy conversion device 26 according to possible embodiments can comprise a charge circuit of the non-inverting buck-boost type configured to charge the bank of ultracapacitors by a PWM-type (Pulse Width Modulation) modulation.

According to some embodiments, the buck-boost charge circuit comprises a MOSFET (Metal-Oxide Semiconductor Field-Effect Transistor) switch which is configured as a low-side switch, so that the drive circuit is simpler and less expensive. The low-side configuration also allows the circuit to carry out safety operations.

In particular, the MOSFET switch is commanded to interrupt the PWM type modulation and stay open in the event of strong winds, to protect the wind generator 24 and the energy conversion device 26.

The wind generator 24 can be connected in parallel to the bank of ultracapacitors 18, and this allows to automatically brake the wind generator 24, for example in the event of strong wind, or in the event of malfunctions of the apparatus 10, by applying to the wind generator 24 a maximum load which sets a low number of rpm and hence reduces the rotation speed.

According to some embodiments, the buck-boost charge circuit is commanded by an electronic board, for example the FPGA type (Field Programmable Gate Array).

The charge circuit can be controlled by a tracking algorithm of the maximum power point (MPPT - Maximum Power Point Tracking), to guarantee that the circuit converts the maximum quantity of wind power into electric energy, irrespective of the wind speed and/or the circuit load.

According to some embodiments, the MPPT algorithm is based on a closed ring current control. The algorithm regulates the duty cycle of the PWM modulation according to a method based on "disrupt and detect". The electronic board disrupts the duty cycle, increasing it or decreasing it, and constantly monitors the charge current. If the electronic board detects that the intensity of the current increases following the disruption of the duty cycle, the duty cycle is further increased in the same direction; otherwise, if the intensity of the current decreases, the duty cycle will be increased in the opposite direction. In particular, the duty cycle is increased in the direction that determines an increase in the current.

According to some embodiments, not shown in the drawings, the wind power production unit 14a can comprise another braking device of the wind generator 24, configured to be activated in strong winds in order to brake the wind generator 24, reducing its rotation speed.

According to a possible solution, the braking device can be driven automatically when excessive wind is detected, or an excessive number of rpm of the wind generator 24 or too much charge current, for example by means of the electronic board of the sensors. According to a variant embodiment, to detect the wind speed an anemometer can be used, or other device suitable to measure wind speed.

According to a variant embodiment, the braking device can be driven by the control and command unit 20.

According to some embodiments, the accumulation unit 16 can continue to receive energy from the wind generator 24 even when the braking device is active.

According to some embodiments, between the wind generator 24 and the energy conversion device 26 a protection device 28 can be provided, configured to straighten the voltage and/or the current generated by the wind generator 24 and to limit possible voltage peaks or supercurrents due for example to lightning strikes or electric discharges, thus preventing possible damage to the energy conversion device 26.

According to a possible solution, a solar energy production unit 14b can also be provided. The solar energy production unit 14b can comprise one or more photovoltaic panels 30 and an energy conversion device 31, configured to transform the solar energy produced by the photovoltaic panels 30 into electric energy that can be stored in the ultracapacitor 18.

According to some embodiments, the energy conversion device 31 of the solar energy production unit 14b can have a configuration similar to that of the energy conversion device 26 of the wind energy production unit 14a.

According to embodiments described using fig. 2, the apparatus 10 can comprise an electric energy converter 22 connected between the at least one ultracapacitor 18 and the user device 12 and configured to transform the electric energy accumulated in the ultracapacitor 18 into energy suitable to be used by the user device 12.

In particular, the electric energy converter 22 is configured to transform the direct voltage supplied by the ultracapacitors 18 into alternate voltage suitable to power the user device 12.

According to embodiments described using fig. 2, the electric energy converter 22 can comprise a bridge circuit 32, a transformer 33 and a power filter 34.

According to possible embodiments, the bridge circuit 32 can be an "H" bridge for example, made with semiconductors, for example MOSFET (Metal-Oxide Semiconductor Field-Effect Transistor).

According to a possible solution, the transformer 33 can be a high-frequency step-up transformer.

The combination of the MOSFET bridge circuit 32 and the high-frequency transformer 33 makes the electric energy converter 22 suitable to operate in a very wide range of voltages, i.e. suitable to operate in most of the voltage range of the ultracapacitors 18, for example in at least two thirds of said range, allowing the electric energy converter 22 to adapt to the different charge accumulated therein.

According to possible embodiments, between the accumulation unit 16 and the electric energy converter 22 a protection device 35 can be provided, for example a fuse, to protect the bank of ultracapacitors 18 from possible supercurrents caused for example by a malfunction of the electric energy converter 22.

According to embodiments described using figs. 1 and 2, the apparatus 10 can comprise a first switch device 36 connected to the electric energy converter 22 and to the user device 12 and configured to allow or selectively interrupt the electric connection between the electric energy converter 22 and the user device 12.

The apparatus 10 can also comprise a second switch device 37 connected to the user device 12 and to the external electric network 15 and configured to allow or selectively interrupt the electric connection between the user device 12 and the external electric network 15.

According to possible embodiments, a protection element 38 can be provided, for example a switch element between the first switch device 36 and the user device 12 to interrupt the connection between them in the event of supervoltages or supercurrents.

According to some embodiments, the switch devices 36, 37 can be solid-state switches, and can be driven by the control and command unit 20.

In particular it can be provided that the control and command unit 20 is configured to selectively activate the first switch device 36 and the second switch device 37 and to selectively connect the user device 12 to the accumulation unit 16, or respectively to the electric network 15 at least as a function of the charge available in the at least one ultracapacitor 18.

According to some embodiments, the switch devices 36, 37 can be integrated into a single switch device, so that de-activating one switch device 36, 37 implies automatically activating the other switch device 37, 36.

The control and command unit 20 can also be connected to the electric energy converter 22 to activate/de-activate it depending on whether the user device 12 is connected to the bank of ultracapacitors 18 or the external electric network 15. According to some embodiments, the control and command unit 20 controls the switch devices 36, 37 and the electric energy converter 22 so as to maintain the integrity of the sinusoidal wave form of the voltage and/or current.

If the control and command unit 20 detects that in the ultracapacitors 18 there is not a sufficient charge present, it disenables the first switch device 36 and enables the second switch device 37, so that the user device 12 is powered by the external electric network 15.

According to possible embodiments, the quantity of sufficient charge can be determined according to a minimum value of charge set.

According to a variant, the quantity of sufficient charge can be determined according to the quantity of charge required by the user device 12.

According to some embodiments, to commute the power of the user device 12 from the bank of ultracapacitors 18 to the external electric network 15, the control and command unit 20 commands the electric energy converter 22 so that it generates two waves of power voltage having two frequency bursts, with a frequency very similar to the value of nominal frequency of the power voltage of the external electric network 15. A first frequency burst is a frequency slightly higher than nominal frequency, while the other burst is a slightly lower frequency, but both comprised in the range of tolerance of the external electric network 15. During the frequency bursts, to command the commutation, the control and command unit 20 waits until the sinusoidal wave of the electric energy converter 22 is synchronized with the sinusoidal wave of the external electric network 15, for example detecting the synchronization when both sinusoidal waves reach the value of 0V in the passage toward the positive side of the sinusoidal wave.

If the control and command unit 20 detects that there is sufficient quantity of charge present in the ultracapacitors 18 to power the user device 12, it will enable the first switch device 36, it will disenable the second switch device 37 and will activate the electric energy converter 22 so as to power the user device 12 using the energy accumulated in the ultracapacitors 18.

According to some embodiments, to commute the energy of the user device 12 from the external electric network 15 to the bank of ultracapacitors 18, the control and command unit 20 waits until the sinusoidal wave of the voltage of the external electric network 15 passes through the level of 0V in its passage toward the positive side of the sinusoidal wave. As soon as it detects this passage, the control and command unit 20 enables the electric energy converter 22 so that the voltage wave starts from 0V and grows in the positive direction of the sinusoidal wave, and commutes the switch devices 36, 37.

If the ultracapacitors 18 are saturated with accumulated electric energy and the user device 12 does not use up all the energy produced by the renewable energy production units 14, then the excess energy can be sent to another energy accumulation device.

According to some embodiments, the energy accumulation device can be a heating device 40, which is able to accumulate the electric energy accumulated in the ultracapacitors 18 and transform it into thermal energy.

According to a possible embodiment, the heating device 40 can be associated with a tank 41, for example containing domestic water which can be used by the user device 12.

According to some embodiments, the electric energy produced by the renewable energy production unit 14 is stored in two different ways: as electric energy in the ultracapacitor 18 and as thermal energy in the tank 41 containing water.

The electric energy stored in the ultracapacitor 18 is used by the electric energy converter 22 to power the electric charges of the user device 12, while the thermal energy stored in the tank 41 in the form of hot water is used to reduce the quantity of energy required to supply hot water to the user device 12.

According to some embodiments, the control and command unit 20 gives priority to charging the ultracapacitor 18, because the power taken from the traditional power network is generally more expensive than the type of power used to heat domestic water, thus allowing a greater saving in the cost of energy.

The apparatus 10 allows to use all the energy produced without having to introduce it into the external electric network, with consequent economic benefits.

According to some embodiments, between the accumulation unit 16 and the heating device 40 a switch device 42 can be provided, selectively activated by the control and command unit 20 to allow or prevent the transmission of the electric energy from the accumulation unit 16 and the heating device 40, depending on the quantity of charge accumulated and on the requirements of the user device 12.

According to possible embodiments, the energy accumulation device can also be used to discharge the ultracapacitors 18 in the event of malfunctions of the apparatus 10 or the electric plant of the user device 12.

According to possible solutions, downstream of the switch device 42 a protection element 44 can be provided, for example a fuse, to prevent super-voltages or supercurrents which could damage the energy accumulation device, or create danger for a user through the hot water in the tank 41.

According to embodiments described using fig. 2, the apparatus 10 also comprises a commutation device 45 configured to selectively connect the user device 12 to the external electric network 15 through the apparatus 10, or directly to the external electric network 15.

According to a possible embodiment, the switch device 45 can be a solid-state switch.

According to some embodiments, the commutation device 45 can be a manual commutation device that can be selectively activated by a user, so as to guarantee electric energy to the user device 12 even in the event of a malfunction of any component of the apparatus 10, or in the event of maintenance.

According to possible embodiments, between the second switch device 37, in this case between the commutation device 45 and the external electric network 15, a protection element 47 can be provided, to interrupt the connection between the second switch device 37 and the external electric network 15 in the event of super-voltages or supercurrents that could damage the accumulation unit 16 and/or the external electric network 15 if the apparatus 10 malfunctions.

According to embodiments described using fig. 2, the apparatus 10 can also comprise a user interface 46, for example a display interface, connected to the control and command unit 20 to carry information concerning the apparatus 10.

For example, the user interface 46 can carry information on the functioning condition of the apparatus 10, or concerning the quantity of energy produced by the one or more renewable energy production units 14 and/or on the quantity of charge accumulated in the ultracapacitors 18.

It is clear that modifications and/or additions of parts may be made to the apparatus to accumulate and supply electric energy to a user device 12 as described heretofore, without departing from the field and scope of the present invention.

It is also clear that, although the present invention has been described with reference to some specific examples, a person of skill in the art shall certainly be able to achieve many other equivalent forms of apparatus to accumulate and supply electric energy, having the characteristics as set forth in the claims and hence all coming within the field of protection defined thereby.

## Claims

1. Apparatus to accumulate and supply electric energy to a user device (12), said user device (12) being connected to said apparatus and to an electric network (15), said apparatus comprising: at least one renewable energy production unit (14); an accumulation unit (16) to accumulate the electric energy produced by the at least one renewable energy production unit (14), and a control and command unit (20), wherein said accumulation unit (16) comprises at least one ultracapacitor (18) to accumulate the electric energy, wherein said apparatus comprises an electric energy convertor (22) connected between said ultracapacitor (18) and said user device (12) and configured to transform the electric energy accumulated in said ultracapacitor (18) into energy suitable to be used by said user device (12), wherein the apparatus comprises a first switch device (36) connected between said electric energy converter (22) and said user device (12), and a second switch device (37) connected between said user device (12) and said electric network (15), wherein said control and command unit (20) is configured to selectively activate said first switch device (36) and said second switch device (37) and to selectively connect said user device (12) to said accumulation unit (16) or respectively to said electric network (15) at least as a function of the charge available in said at least one ultracapacitor (18), **characterized in that** said command and control unit (20) commands the electric energy converter (22) and is controlled by an electronic board, wherein said command and control unit (20) is configured to generate two waves of power voltage having two frequency bursts, with a frequency very similar to the value of nominal frequency of the power voltage of the external electric network, in which a first frequency burst is a frequency slightly higher than nominal frequency, while the other burst is a slightly lower frequency, but both comprised in the range of tolerance of the external electric network (15), such that, during the frequency bursts, to command the commutation, wherein the control and command unit (20) is configured to wait until the sinusoidal wave of the electric energy converter (22) is synchronized with the sinusoidal wave of the external electric network (15), detecting the synchronization when both sinusoidal waves reach the value of 0V in the passage toward the positive side of the sinusoidal wave .

2. Apparatus as in claim 1, **characterized in that** said accumulation unit (16) comprises a bank of ultracapacitors (18) connected in series to each other.

3. Apparatus as in claim 1 or 2, **characterized in that** said electric energy convertor (22) comprises a bridge circuit (32) and a high-frequency transformer (33).

4. Apparatus as in any claim hereinbefore, **characterized in that** said at least one renewable energy production unit (14) comprises a wind power production unit (14a) equipped with a wind generator (24) and at least an energy conversion device (26).

5. Apparatus as in claim 4, **characterized in that** said energy conversion device (26) comprises a charge circuit of the non-inverting buck-boost type configured to charge the at least one ultracapacitor (18) by a PWM-type (Pulse Width Modulation) modulation.

6. Apparatus as in claim 5, **characterized in that** said buck-boost charge circuit comprises a MOSFET switch configured as a low-side switch.

7. Apparatus as in any claim hereinbefore, **characterized in that** it comprises a protection element (38) connected between said first switch device (36) and said user device (12) to interrupt the connection between them if there are super-voltages or supercurrents, and another protection element (47) provided between said second switch device (37) and said electric network (15) to interrupt the connection between them if there are super-voltages or supercurrents.

8. Apparatus as in any claim hereinbefore, **characterized in that** it comprises another accumulation device configured to accumulate the excess energy produced by the renewable energy production unit (14) when the accumulation unit (16) is saturated.

9. Method to accumulate and supply electric energy to a user device (12) which provides to:
- produce electric energy with a renewable energy production unit (14);
- accumulate said electric energy produced in an accumulation unit (16);
**characterized in that** it provides to:
- accumulate said energy produced by said renewable energy production unit (14) in at least one ultracapacitor (18);
- convert, using an electric energy converter (22), the electric energy accumulated in said ultracapacitor (18) into energy suitable to be used by said user device (12);
- selectively connect said user device (12) to said accumulation unit (16) or to an electric network (15) by means respectively of a first switch device (36) and a second switch device (37), selectively drivable by a control and command unit (20) at least as a function of the charge available in said at least one ultracapacitor (18), wherein said command and control unit (20) comprises an electronic board, commands the electric energy converter (22) and is configured to generate two waves of power voltage having two frequency bursts, with a frequency very similar to the value of nominal frequency of the power voltage of the external electric network, in which a first frequency burst is a frequency slightly higher than nominal frequency, while the other burst is a slightly lower frequency, but both comprised in the range of tolerance of the external electric network (15), such that, during the frequency bursts, to command the commutation, the control and command unit (20) waits until the sinusoidal wave of the electric energy converter (22) is synchronized with the sinusoidal wave of the external electric network (15), detecting the synchronization when both sinusoidal waves reach the value of 0V in the passage toward the positive side of the sinusoidal wave.

10. Method as in claim 9, **characterized in that,** if the accumulation unit (16) is saturated with electric energy, it provides to transfer the excess electric energy from said accumulation unit (16) to another accumulation device so as to continue to accumulate the energy produced by the at least one renewable energy production unit (14).

## Patentansprüche

1. Vorrichtung zum Speichern und Zuführen von elektrischer Energie zu einer Anwendervorrichtung (12), wobei die Anwendervorrichtung (12) mit der Vorrichtung und einem elektrischen Netzwerk (15) verbunden ist, wobei die Vorrichtung aufweist: wenigstens eine Erneuerbare-Energie-Erzeugungseinheit (14), eine Speichereinheit (16), um die von der wenigstens einen Erneuerbare-Energie-Erzeugungseinheit (14) erzeugte elektrische Energie zu speichern, und eine Steuerungs- und Befehlseinheit (20), wobei die Speichereinheit (16) wenigstens einen Ultrakondensator (18) aufweist, um die elektrische Energie zu speichern, wobei die Vorrichtung einen Elektrische-Energie-Wandler (22) aufweist, der zwischen dem Ultrakondensator (18) und der Anwendervorrichtung (12) verbunden und dazu eingerichtet ist, die in dem Ultrakondensator (18) gespeicherte elektrische Energie in Energie umzuwandeln, die für eine Verwendung durch die Anwendervorrichtung (12) geeignet ist, wobei die Vorrichtung aufweist: eine erste Schaltvorrichtung (36), die zwischen dem Elektrische-Energie-Wandler (22) und der Anwendervorrichtung (12) verbunden ist, und eine zweite Schaltvorrichtung (37), die zwischen der Anwendervorrichtung (12) und dem elektrischen Netzwerk (15) verbunden ist, wobei die Steuerungs- und Befehlseinheit (20) dazu eingerichtet ist, selektiv die erste Schaltvorrichtung (36) und die zweite Schaltvorrichtung (37) zu aktivieren und selektiv die Anwendervorrichtung (12) mit der Speichereinheit (16) bzw. mit dem elektrischen Netzwerk (15) wenigstens als Funktion der in dem wenigstens einen Ultrakondensator (18) verfügbaren Ladung zu verbinden,
**dadurch gekennzeichnet, dass** die Befehls-und Steuerungseinheit (20) den Elektrische-Energie-Wandler (22) ansteuert und von einer elektronischen Platine gesteuert wird, wobei die Befehls- und Steuerungseinheit (20) dazu eingerichtet ist, zwei Wellen einer Leistungsspannung zu erzeugen, welche zwei Frequenzbursts mit einer Frequenz aufweisen, die sehr ähnlich dem Wert einer Nennfrequenz der Leistungsspannung des externen elektrischen Netzwerks ist, wobei ein erster Frequenzburst eine Frequenz ist, die geringfügig höher als eine Nennfrequenz ist, während der andere Burst eine geringfügig niedrigere Frequenz ist, wobei aber beide in dem Toleranzbereich des externen elektrischen Netzwerks (15) enthalten sind, um während der Frequenzbursts die Kommutierung anzuweisen, wobei die Steuerungs- und Befehlseinheit (20) dazu eingerichtet ist, zu warten, bis die sinusförmige Welle des Elektrische-Energie-Wandlers (22) mit der sinusförmigen Welle des externen elektrischen Netzwerks (15) synchronisiert ist, wobei die Synchronisierung detektiert wird, wenn beide sinusförmigen Wellen den Wert von 0V in dem Durchgang zu der positiven Seite der sinusförmigen Welle erreichen.

2. Vorrichtung nach Anspruch 1, **dadurch gekennzeichnet, dass** die Speichereinheit (16) eine Bank von Ultrakondensatoren (18) aufweist, die miteinander in Reihe geschaltet sind.

3. Vorrichtung nach Anspruch 1 oder 2, **dadurch gekennzeichnet, dass** der Elektrische-Energie-Wandler (22) eine Brückenschaltung (32) und einen Hochfrequenztransformator (33) aufweist.

4. Vorrichtung nach einem der vorhergehenden Ansprüche, **dadurch gekennzeichnet, dass** wenigstens eine Erneuerbare-Energie-Erzeugungseinheit (14) eine Windleistungserzeugungseinheit (14a), die mit einem Windgenerator (24) ausgestattet ist, und wenigstens eine Energiewandlungsvorrichtung (26) aufweist.

5. Vorrichtung nach Anspruch 4, **dadurch gekennzeichnet, dass** die Energiewandlungsvorrichtung (26) eine Aufladungsschaltung des nichtinvertierenden Auf-Abwärtswandler-Typs aufweist, die dazu eingerichtet ist, den wenigstens einen Ultrakondensator (18) durch eine Modulation von einem PWM-Typ (Pulsweitenmodulationstyp) aufzuladen.

6. Vorrichtung nach Anspruch 5, **dadurch gekennzeichnet, dass** die Auf-Abwärtswandler-Aufladungsschaltung einen MOSFET-Schalter aufweist, der als ein Low-Side-Schalter konfiguriert ist.

7. Vorrichtung nach einem der vorhergehenden Ansprüche, **dadurch gekennzeichnet, dass** sie aufweist: ein Schutzelement (38), welches zwischen der ersten Schaltvorrichtung (36) und der Anwendervorrichtung (12) geschaltet ist, um die Verbindung zwischen ihnen zu trennen, falls Überspannungen oder Überströme auftreten, und ein anderes Schutzelement (47), welches zwischen der zweiten Schaltvorrichtung (37) und dem elektrischen Netzwerk (15) bereitgestellt ist, um die Verbindung zwischen ihnen zu trennen, falls Überspannungen oder Überströme auftreten.

8. Vorrichtung nach einem der vorhergehenden Ansprüche, **dadurch gekennzeichnet, dass** sie eine andere Speichervorrichtung aufweist, die dazu eingerichtet ist, die übermäßige Energie, die von der Erneuerbare-Energie-Erzeugungseinheit (14) erzeugt wird, zu speichern, wenn die Speichereinheit (16) gesättigt ist.

9. Verfahren zum Speichern und Zuführen von elektrischer Energie zu einer Anwendervorrichtung (12), das vorsieht:
- Erzeugen elektrischer Energie mit einer Erneuerbare-Energie-Erzeugungseinheit (14),
- Speichern der erzeugten elektrischen Energie in einer Speichereinheit (16),
**dadurch gekennzeichnet, dass** es vorsieht:
- Speichern der durch die Erneuerbare-Energie-Erzeugungseinheit (14) erzeugten Energie in wenigstens einem Ultrakondensator (18),
- Umwandeln unter Verwendung eines Elektrische-Energie-Wandlers (22) der in dem Ultrakondensator (18) gespeicherten elektrischen Energie in Energie, die für eine Verwendung durch die Anwendervorrichtung (12) geeignet ist,
- Selektives Verbinden der Anwendervorrichtung (12) mit der Speichereinheit (16) oder einem elektrischen Netzwerk (15) mittels einer ersten Schaltvorrichtung (36) bzw. einer zweiten Schaltvorrichtung (37), die durch eine Steuerungs- und Befehlseinheit (20) wenigstens als Funktion der in dem wenigstens einen Ultrakondensator (18) verfügbaren Ladung selektiv steuerbar sind, wobei die Befehls- und Steuerungseinheit (20) eine elektronische Platine aufweist, den Elektrische-Energie-Wandler (22) ansteuert und dazu eingerichtet ist, zwei Wellen einer Leistungsspannung zu erzeugen, die zwei Frequenzbursts mit einer Frequenz aufweisen, die dem Wert einer Nennfrequenz der Leistungsspannung des externen elektrischen Netzwerks sehr ähnlich ist, wobei ein erster Frequenzburst eine Frequenz ist, die geringfügig größer als eine Nennfrequenz ist, während der andere Burst eine geringfügig niedrigere Frequenz ist, aber beide in dem Toleranzbereich des externen elektrischen Netzwerks (15) enthalten sind, um während der Frequenzbursts die Kommutierung anzuweisen, wobei die Steuerungs- und Befehlseinheit (20) wartet, bis die sinusförmige Welle des Elektrische-Energie-Wandlers (22) mit der sinusförmigen Welle des externen elektrischen Netzwerks (15) synchronisiert ist, wobei die Synchronisierung detektiert wird, wenn beide sinusförmigen Wellen den Wert von 0V in dem Durchgang zu der positiven Seite der sinusförmigen Welle erreichen.

10. Verfahren nach Anspruch 9, **dadurch gekennzeichnet, dass** es, wenn die Speichereinheit (16) mit elektrischer Energie gesättigt ist, eine Übertragung der überschüssigen elektrischen Energie von der Speichereinheit (16) zu einer anderen Speichervorrichtung vorsieht, um ein Speichern der elektrischen Energie, die von der wenigstens einen Erneuerbare-Energie-Erzeugungseinheit (14) erzeugt wird, fortzusetzen.

## Revendications

1. Appareil pour accumuler et fournir de l'énergie électrique à un dispositif utilisateur (12), ledit dispositif utilisateur (12) étant connecté audit appareil et à un réseau électrique (15), ledit appareil comprenant : au moins une unité de production d'énergie renouvelable (14) ; une unité d'accumulation (16) pour accumuler l'énergie électrique produite par la au moins une unité de production d'énergie renouvelable (14), et une unité de contrôle et de commande (20), dans lequel ladite unité d'accumulation (16) comprend au moins un ultra-condensateur (18) pour accumuler de l'énergie électrique, dans lequel ledit appareil comprend un convertisseur d'énergie électrique (22) connecté entre ledit ultra-condensateur (18) et ledit dispositif utilisateur (12) et configuré pour transformer l'énergie électrique accumulée dans ledit ultra-condensateur (18) en une énergie pouvant être utilisée par ledit dispositif utilisateur (12), dans lequel l'appareil comprend un premier dispositif de commutation (36) connecté entre ledit convertisseur d'énergie électrique (22) et ledit dispositif d'utilisateur (12), et un second dispositif de commutation (37) connecté entre ledit dispositif utilisateur (12) et ledit réseau électrique (15), dans lequel ladite unité de contrôle et de commande (20) est configurée pour activer sélectivement ledit premier dispositif de commutation (36) et ledit second dispositif de commutation (37) et pour connecter sélectivement ledit dispositif utilisateur (12) à ladite unité d'accumulation (16) ou respectivement audit réseau électrique (15) au moins en fonction de la charge disponible dans ledit au moins un ultra-condensateur (18),
**caractérisé en ce que** ladite unité de commande et de contrôle (20) commande le convertisseur d'énergie électrique (22) et est contrôlée par une carte électronique, dans lequel ladite unité de commande et de contrôle (20) est configurée pour générer deux ondes de tension d'alimentation ayant deux salves de fréquence, avec une fréquence très similaire à la valeur de fréquence nominale de la tension d'alimentation du réseau électrique externe, où une première salve de fréquence est une fréquence légèrement supérieure à la fréquence nominale, tandis que l'autre rafale est une fréquence légèrement inférieure, mais toutes deux comprises dans la plage de tolérance du réseau électrique externe (15), de manière à, pendant les salves de fréquence, commander la commutation, dans lequel l'unité de contrôle et de commande (20) est configurée pour attendre jusqu'à ce l'onde sinusoïdale du convertisseur d'énergie électrique (22) soit synchronisée avec l'onde sinusoïdale du réseau électrique externe (15), en détectant la synchronisation lorsque les deux ondes sinusoïdales atteignent la valeur de 0V dans le passage vers le positif e côté de l'onde sinusoïdale.

2. Appareil selon la revendication 1, **caractérisé en ce que** ladite unité d'accumulation (16) comprend un groupe d'ultra-condensateurs (18) connectés en série les uns aux autres.

3. Appareil selon la revendication 1 ou 2, **caractérisé en ce que** ledit convertisseur d'énergie électrique (22) comprend un circuit en pont (32) et un transformateur haute fréquence (33).

4. Appareil selon l'une quelconque des revendications précédentes, **caractérisé en ce que** ladite au moins une unité de production d'énergie renouvelable (14) comprend une unité de production d'énergie éolienne (14a) équipée d'un aérogénérateur (24) et d'au moins un dispositif de conversion d'énergie (26).

5. Appareil selon la revendication 4, **caractérisé en ce que** ledit dispositif de conversion d'énergie (26) comprend un circuit de charge du type abaisseur-élévateur non inverseur configuré pour charger le au moins un ultra-condensateur (18) par une modulation de type PWM (modulation de largeur d'impulsion).

6. Appareil selon la revendication 5, **caractérisé en ce que** ledit circuit de charge abaisseur-élévateur comprend un commutateur MOSFET configuré en tant que commutateur côté bas.

7. Appareil selon l'une quelconque des revendications précédentes, **caractérisé en ce qu'**il comprend un élément de protection (38) connecté entre ledit premier dispositif de commutation (36) et ledit dispositif utilisateur (12) pour interrompre la connexion entre eux s'il existe des surtensions ou des super-courants et un autre élément de protection (47) prévu entre ledit second dispositif de commutation (37) et ledit réseau électrique (15) pour interrompre la connexion entre eux s'il existe des surtensions ou des super-courants.

8. Appareil selon l'une quelconque des revendications précédentes, **caractérisé en ce qu'**il comprend un autre dispositif d'accumulation configuré pour accumuler le surplus d'énergie produit par l'unité de production d'énergie renouvelable (14) lorsque l'unité d'accumulation (16) est saturée.

9. Méthode pour accumuler et fournir de l'énergie électrique à un dispositif utilisateur (12) qui consiste à :
- produire de l'énergie électrique avec une unité de production d'énergie renouvelable (14) ;
- accumuler ladite énergie électrique produite dans une unité d'accumulation (16) ;
**caractérisée en ce qu'**elle comprend les étapes consistant à :
- accumuler ladite énergie produite par ladite unité de production d'énergie renouvelable (14) dans au moins un ultra-condensateur (18) ;
- convertir, à l'aide d'un convertisseur d'énergie électrique (22), l'énergie électrique accumulée dans ledit ultra-condensateur (18) en une énergie appropriée pour être utilisée par ledit dispositif utilisateur (12) ;
- connecter sélectivement ledit dispositif utilisateur (12) à ladite unité d'accumulation (16) ou à un réseau électrique (15) au moyen respectivement d'un premier dispositif de commutation (36) et d'un second dispositif de commutation (37), pouvant être pilotés sélectivement par une unité de contrôle et de commande (20) au moins en fonction de la charge disponible dans ledit au moins un ultra-condensateur (18), dans laquelle ladite unité de commande et de contrôle (20) comprend une carte électronique, commande le convertisseur d'énergie électrique (22) et est configurée pour générer deux ondes de tension d'alimentation ayant deux salves de fréquence, avec une fréquence très similaire à la valeur de fréquence nominale de la tension d'alimentation du réseau électrique externe, dans laquelle une première salve de fréquence est une fréquence légèrement supérieure à la fréquence nominale, tandis que l'autre salve est une fréquence légèrement inférieure, mais les deux sont comprises dans la plage de tolérance du réseau électrique externe (15) de manière à, pendant les salves de fréquence, commander la commutation, l'unité de contrôle et de commande (20) attend jusqu'à ce que l'onde sinusoïdale du convertisseur d'énergie électrique (22) soit synchronisée avec l'onde sinusoïdale du réseau électrique externe (15), en détectant la synchronisation lorsque les deux ondes sinusoïdales atteignent la valeur de 0V dans le passage vers le côté positif de l'onde sinusoïdale.

10. Méthode selon la revendication 9, **caractérisé en ce que**, si l'unité d'accumulation (16) est saturée en énergie électrique, elle permet de transférer l'énergie électrique excédentaire de ladite unité d'accumulation (16) vers un autre dispositif d'accumulation de manière à continuer d'accumuler l'énergie produite par la au moins une unité de production d'énergie renouvelable (14).
